# EUROPEAN PATENT APPLICATION

(11) **EP 4 616 698 A1**
(43) Date of publication of application: **17.09.2025**
(21) Application number: 24163167.0
(22) Date of filing: 13.03.2024
(51) Int. Cl.: A01D 43/08, A01F 12/40

(54) **STRAW CHOPPER KNIFE WEAR DETECTION**

(71) Applicant: CNH Industrial Belgium N.V., 8210 Zedelgem (BE)
(72) Inventor: Vanlerberghe, Jasper, 8210 Zedelgem (BE); Missotten, Bart M.A., 8210 Zedelgem (BE); Jongmans, Dré W.J., 8210 Zedelgem (BE); Van Campenhout, Simon, 8210 Zedelgem (BE); Sai Niranjan, Reddy Kukkala, 8210 Zedelgem (BE)
(74) Representative: CNH Industrial IP Department

(57) **Abstract**

A straw chopper (72) comprises a chopper housing (110), a rotational axle (120) carrying a plurality of knives (130), a counter knife (140), a camera (200), and a controller (300). The chopper housing (110) comprises an inlet for receiving unchopped straw and an outlet for releasing chopped straw. The knives (130) extend radially from the rotational axle (120) and are configured for rotating therewith. The knives (130) and the counter knife (140) are configured to cooperatively exert a chopping action on the received straw. The camera (200) is configured to obtain camera images of at least a portion of the chopped straw, downstream of the counter knife (140). The controller (300) is coupled to the camera (200) for receiving the camera images therefrom. The controller (300) is configured to process the camera images. Based on the camera images, the controller (300) determines a chopping quality of the straw chopper (72) during use, and a knife wear of at least one of the knives (130) when not in use.

## Description

### TECHNICAL FIELD

The present invention relates to a straw chopper for a harvester. The straw chopper comprises a chopper housing with an inlet for receiving unchopped straw and an outlet for releasing chopped straw, a rotational axle carrying a plurality of knives extending radially therefrom and configured for rotating therewith, and a counter knife, the plurality of knives and the counter knife being configured to cooperatively exert a chopping action on the received straw. The invention further relates to a method of monitoring such a straw chopper.

### BACKGROUND

Many agricultural harvesters are designed to harvest crops and leave some or all of the harvested crop behind on the field. In a combine harvester, for example, the harvested crop is threshed to separate the grain therefrom, and the remaining straw is transported to the rear of the combine harvester for release on the field. The release of straw residue behind the combine harvester may be done by dropping the straw in a swath on the field, for example to allow it being picked up by a baler machine later. Often, however, the straw residue is chopped into smaller pieces by a straw chopper and spread over the field by a spreader system.

A typical design for such a straw chopper uses a rotating shaft or drum with a plurality of knives extending radially therefrom. The shaft or drum is at least partly located inside a chopper housing and oriented at least approximately in parallel with the field and perpendicular to the driving direction of the harvester. The unchopped straw is received at an inlet of the chopper housing that is typically located at the top and/or front end of the chopper housing. Chopped straw is released from an outlet of the chopper housing that is typically located more to the bottom and/or rear end of the chopper housing. In use the knives rotate around the rotational axis of the shaft or drum at high speed. Counter knives are usually positioned adjacent the chopper housing outlet, such that the straw is chopped between a rotating knife and a stationary counter knife. When a plurality of knives are provided along the width of the straw chopper, the straw is chopped into many smaller pieces before it leaves the chopper housing.

Over time, the blades of the chopper knives and counter knife will start to show signs of wear. When they lose their sharpness, the power needed to cut through the straw increases. As a result, the harvester's fuel consumption increases, less power is available for other power consuming processes of the harvester, or the harvester needs to slow down. Consequently, there is a strong desire to keep the knives and the counter knife in optimal condition and to take appropriate action when (or before) knife wear starts to reduce chopping quality or increase fuel consumption. Conventionally, knife wear is monitored by visual inspection of the knives, which brings the disadvantage of having to rely on the user's diligence and ability to reliably assess the wear status of the knives by visual inspection.

It is an aim of the present invention to address one or more disadvantages associated with the prior art.

### SUMMARY OF THE INVENTION

According to an aspect of the invention there is provided a straw chopper for a harvester, the straw chopper comprising a chopper housing, a rotational axle carrying a plurality of knives, a counter knife, a camera, and a controller. The chopper housing comprises an inlet for receiving unchopped straw and an outlet for releasing chopped straw. The knives extend radially from the rotational axle and are configured for rotating therewith. The knives and the counter knife are configured to cooperatively exert a chopping action on the received straw. The camera is configured to obtain camera images of at least a portion of the chopped straw, downstream of the counter knife. The controller is coupled to the camera for receiving the camera images therefrom. The controller is configured to process the camera images. Based on the camera images, the controller determines a chopping quality of the straw chopper during use, and a knife wear of at least one of the knives when not in use.

There have been some attempts in the past to use camera images of cut crop material to assess a quality of the cuts made by a chopper system. However, cut quality depends on many other factors, like moisture level and crop variety, too. It has been proven difficult to accurately and reliably determine knife wear from images of moving crop material. In contrast with such earlier attempts, the inventors have now developed a different approach wherein knife wear is not determined indirectly based on crop images taken while the straw chopper is in use, but directly from images of at least one of the knives when no chopping occurs. Advantageously, a camera that may already be provided for monitoring the chop quality during use of the straw chopper is now additionally used for determining knife wear when not chopping straw. By looking at knife wear directly instead of at the possible indirect results of knife wear on the crop, knife wear can be determined more accurately. A further advantage of the now presented knife wear detection system is that the knives in the images to be analysed are not by crop material. With the now proposed straw chopper, a single camera is used for monitoring two important aspects of the straw chopping process. Harvesters that already have a camera installed for the purpose of monitoring chop quality can easily be upgraded to monitor knife wear better than before. Even if the camera images only show a single knife or a few knives of the plurality of knives, accurate knife wear information about those knives can be used to provide timely warnings of an approaching need to replace some or all of the knives.

In a preferred embodiment, the controller is configured to, when not in use, use the camera to obtain a first camera image of a first one of the plurality of knives, determine, based on the first camera image, a knife wear of the first one of the plurality of knives, rotate the rotational axle, use the camera to obtain a second camera image of a second one of the plurality of knives, and determine, based on the second camera image, a knife wear of the second one of the plurality of knives. Typically, knives are mounted to the rotational axle at about three to five different angular positions. At any given angular position of the rotational axle, only one or two of those knives may be in view of the camera. Also, the knives that are in view of the camera may not be optimally positioned to accurately determine their wear. By actively rotating the rotational axle after obtaining the first camera image and before taking the second camera image, more knives can be monitored without requiring more cameras or adapting the viewpoint or viewing angle of the camera.

Alternatively or additionally, images of individual knives may be taken from two or more different angles to further increase the accuracy of the knife wear monitoring algorithms. The first and second camera images may be obtained while rotating the rotational axle. Alternatively, the rotational axle is brought to a standstill before the next camera image is obtained, so the camera images are obtained while not rotating the rotational axle.

In addition to using direct observation of damage to and wear of the straw chopper knives when the straw chopper is not in use, the controller may be configured to, during use, identify and analyse a straw cut in the camera images, and based on the analysed straw cut, determine the knife wear of at least one of the knives. Determining knife wear in more than one way will help to obtain more accurate results and may provide useful data for analysing how particular types of knife wear patterns affect the chopping quality.

At least some or all of the knives may be flailing knives. The relative position and orientation of a flailing knife with respect to the camera depends on the rotational speed of the axle. During use, the present crop material may affect the exact knife position too. Accordingly, images of the knives may be taken with the axle rotating at different speeds to obtain images from different viewpoints.

The counter knife is typically provided as a bar comprising a plurality of parallel knife blades, positioned such that the chopper knives on the rotational axle move through gaps between two adjacent counter knife blades during use. In addition to monitoring knife wear of the straw chopper knives on the rotational axle, the knife wear monitoring system may be configured to monitor knife wear of one or more of the counter knife blades too. Of course, for this to be possible, these one or more counter knife blades need to be in view of the camera. Alternatively, a second camera may be used for obtaining images of the counter knife blades.

The controller may further be configured to adapt a position of the counter knife relative to the rotational axle in dependence of the determined chopping quality and/or in dependence of the determined knife wear. When the chopper knives start to lose their effectiveness due to wear, bringing the counter knife closer to the chopper knives may help to increase the cutting action and thereby compensate for the loss in sharpness of the knives. When the distance between the chopper knives and the counter knife is reduced, the power consumption of the straw chopper increases. When the power consumption reaches unacceptable levels, the chopper knives and/or the counter knife blades may, e.g., be replaced or sharpened to make the straw chopper more energy efficient.

According to another aspect of the invention a method is provided for monitoring a straw chopper for a harvester. The method starts with using a camera of the straw chopper to obtain first camera images of straw after having been chopped by the straw chopper. Based on the first camera images, a chopping quality of the straw chopper is determined. The camera is further used to obtain second camera images when the straw chopper is not being used for chopping straw. Based on the second images, a knife wear of at least one of the knives is determined.

This special method allows to analyse how particular types of knife wear patterns affect the chopping quality. Furthermore, this information may be used to determine the knife wear indirectly, using the chopping quality as determined based on the first camera images. The knife wear as determined based on the second camera images may be used to calibrate a chopping quality based algorithm for determining the knife wear. Determining knife wear in more than one way will help to obtain more accurate results.

### BRIEF DESCRIPTION OF THE DRAWINGS

Embodiments of the invention will now be described by way of example with reference to the accompanying drawings, in which:
Figure 1 schematically shows a combine harvester wherein the invention may be advantageously used.
Figure 2 schematically shows a straw chopper according to an embodiment of the invention and suitable for use in the combine harvester of Figure 1.

### DETAILED DESCRIPTION

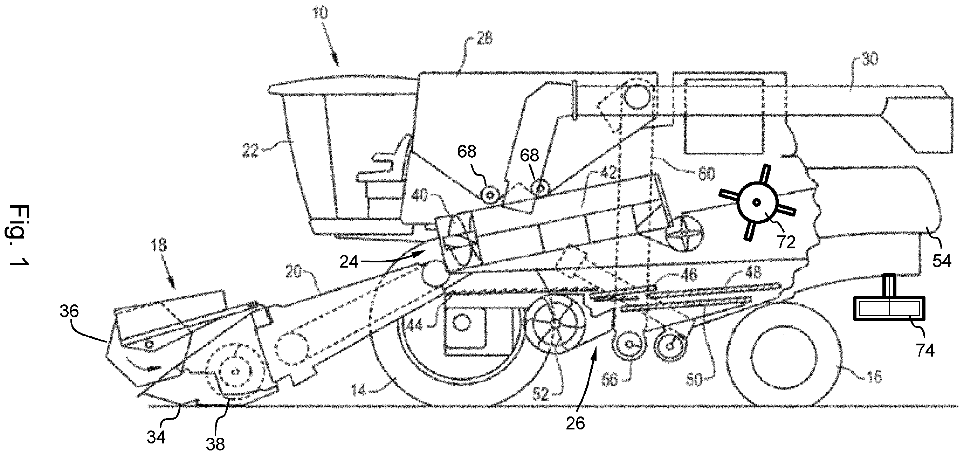

Figure 1 schematically shows an agricultural harvester in the form of a combine harvester 10. A combine harvester 10 as shown in Figure 1 generally includes front and rear round engaging wheels 14, 16, a header 18, a feeder 20, an operator cabin 22, a threshing and separation system 24, a cleaning system 26, a grain tank 28 and an unloading tube 30.

A header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a chopper 72 and spread over the field across the full width of the header 18 by a spreader system 74. The spreader system 74 typically comprises a left and a right rotary spreader, each spreading the chopped crop residue received from the chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

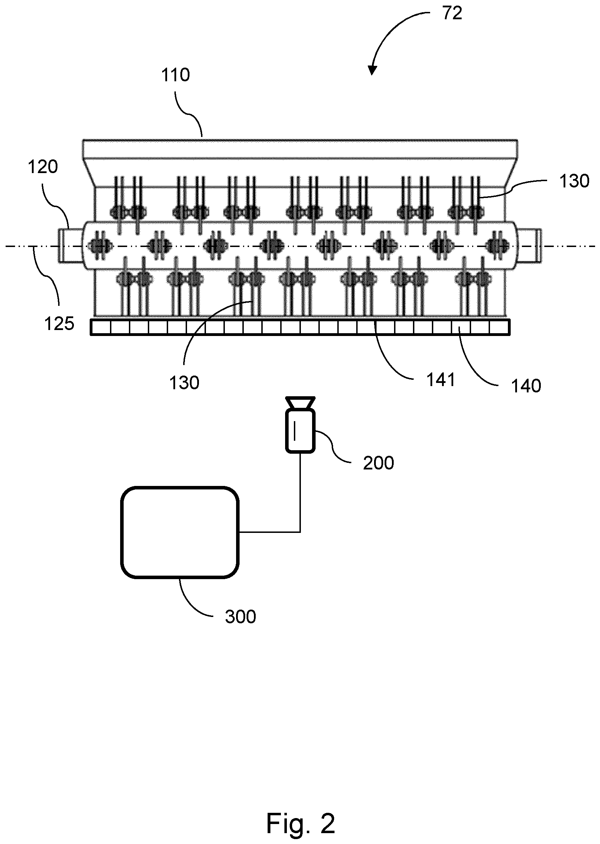

Figure 2 schematically shows a straw chopper 72 according to an embodiment of the invention and suitable for use in the combine harvester 10 of Figure 1. The straw chopper 72 comprises a chopper housing 110, a rotational axle 120 carrying a plurality of knives 130, a counter knife 140, a camera 200, and a controller 300. The chopper housing 110 comprises an inlet for receiving unchopped straw and an outlet for releasing chopped straw. The rotational axle 120 is mounted to the chopper housing 110 or some other part of the combine harvester 10 for rotation around a chopper axis 125. The knives 130 extend radially from the rotational axle 120 and are configured for rotating therewith. The knives 130 and the counter knife 140 are configured to cooperatively exert a chopping action on the received straw. The counter knife 140 is typically provided as a bar comprising a plurality of parallel knife blades, positioned such that, during use, the chopper knives 130 on the rotational axle 120 move through gaps between two adjacent counter knife blades. In some embodiments, two or more counter knives 140 may be provided for providing increased cutting action.

The camera 200 is configured to obtain camera images of at least a portion of the chopped straw, downstream of the counter knife 140. The controller 300 is coupled to the camera 200 for receiving the camera images therefrom. Based on the camera images, the controller 200 determines a chopping quality of the straw chopper 72 during use, and a knife wear of at least one of the chopper knives 130 when not in use.

Determining the chopping quality may, for example, involve measuring a size or size distribution of the pieces of chopped straw material that are visible in the camera images. Other relevant chopping quality parameters may depend on a texture of the cut edges of the straw material. Straight and regular edges may indicate low knife wear and sharp knife edges. Crooked and irregular edges may indicate higher knife wear and blunt knife edges. Standard image recognition and edge detection algorithms may be used to determine the relevant chopping quality parameters. Machine learning and neural networks may be employed to analyse the camera images. The machine learning algorithms may be trained using large amounts of similar camera images of cut crop material, preferably taken by the same or an identical camera 200 during earlier harvesting sessions. The training images may be classified by experienced users who are capable of judging chop quality from such images and who assign values to one or more relevant chopping quality parameters.

Similarly, knife wear may be determined using standard image recognition and edge detection algorithms. Machine learning and neural networks may be employed to analyse the camera images. The machine learning algorithms may be trained using large amounts of similar camera images of chopper knives at various stages of wear, preferably taken by the same or an identical camera 200 inside the same or a similar harvester. The training images may be classified by experienced users who are capable of judging knife wear from such images. Other training data may be obtained by using chopper knife images for which use data is available relating to the use of the respective chopper knives 130 prior to the image being taken. Such use data may, e.g., comprise data describing a number of hours of chopping activity, a volume of straw material having been processed since their first use, or even crop properties of the processed straw material (e.g. crop type, moisture content).

In a preferred embodiment, the controller 300 is configured to control the camera 200 and the rotational axle 120, in order to obtain multiple images with the rotational axle 120 in different angular positions. Typically, knives 130 are mounted to the rotational axle 120 at about three to five different angular positions. At any given angular position of the rotational axle, only one or two of those knives 130 may be in view of the camera 200. Also, the knives 130 that are in view of the camera 200 may not be optimally positioned to accurately determine their wear. By actively rotating the rotational axle 120 between taking different images, more knives 130 can be monitored without requiring more cameras 200 or adapting the viewpoint or viewing angle of the camera 200.

Alternatively or additionally, images of individual knives 130 may be taken from two or more different angles to further increase the accuracy of the knife wear monitoring algorithms. A series of images may be obtained while rotating the rotational axle 120. Alternatively, the rotational axle 120 is brought to a standstill before the next camera image is obtained, so the camera images are obtained while not rotating the rotational axle 120.

In addition to using direct observation of damage to and wear of the straw chopper knives 130 when the straw chopper 72 is not in use, the controller 300 may be configured to, during use, identify and analyse a straw cut in the camera images, and based on the analysed straw cut, determine the knife wear of at least one of the knives 130. Alternatively, a power consumption of the straw chopper 72 or a mechanical load on the straw chopper 72 during use may be monitored and related to the knife wear as determined from the camera images. Load cells or torque sensors may be used for this purpose. Determining knife wear in more than one way will help to obtain more accurate results and may provide useful data for analysing how particular types of knife wear patterns affect the chopping quality. Furthermore, such additional data can be useful for training and calibrating the knife wear detection algorithms.

At least some or all of the knives 130 may be flailing knives 130. The relative position and orientation of a flailing knife 130 with respect to the camera 200 depends on the rotational speed of the axle 120. During use, the present crop material may affect the exact knife position too. Accordingly, images of the knives 130 may be taken with the axle 120 rotating at different speeds to obtain images from different viewpoints.

In addition to monitoring knife wear of the straw chopper knives 130 on the rotational axle 120, the knife wear monitoring system may be configured to monitor knife wear of one or more of the counter knife blades 141 too. Of course, for this to be possible, these one or more counter knife blades 141 need to be in view of the camera 200. Alternatively, a second camera may be used for obtaining images of the counter knife blades 141.

The controller 300 may further be configured to adapt a position of the counter knife 140 relative to the rotational axle 120 in dependence of the determined chopping quality and/or in dependence of the determined knife wear. When the chopper knives 130 start to lose their effectiveness due to wear, bringing the counter knife 140 closer to the chopper knives 130 may help to increase the cutting action and thereby compensate for the loss in sharpness of the knives 130. When the distance between the chopper knives 130 and the counter knife 140 is reduced, the power consumption of the straw chopper 72 increases. When the power consumption reaches unacceptable levels, the chopper knives 130 and/or the counter knife blades 141 may, e.g., be replaced or sharpened to make the straw chopper 72 more energy efficient.

It is noted that the same invention may be used in other types of agricultural harvesters with a similar chopper arrangement. For example, the grass pick up of a baler, a silage wagon, or a grass header for a forage harvester may be constructed similarly with a plurality of knives extending radially from a rotational axle and a counter knife being configured to, cooperatively with the plurality of knives, exert a chopping action on the received crop (grass or straw).

## Claims

1. A straw chopper (72) for a harvester (10), the straw chopper (72) comprising:
a chopper housing (110) with an inlet for receiving unchopped straw and an outlet for releasing chopped straw;
a rotational axle (120) carrying a plurality of knives (130) extending radially therefrom and configured for rotating therewith;
a counter knife (140), the plurality of knives (130) and the counter knife (140) being configured to cooperatively exert a chopping action on the received straw;
a camera (200), configured to obtain camera images of at least a portion of the chopped straw, downstream of the counter knife (140); and
a controller (300), coupled to the camera (200) for receiving the camera images therefrom, the controller (300) being configured to process the camera images and determine based thereon:
a chopping quality of the straw chopper (72) during use, and
a knife wear of at least one of the knives (130) when not in use.

2. A straw chopper (72) as claimed in claim 1, wherein the controller (300) is configured to, when not in use:
use the camera (200) to obtain a first camera image of a first one of the plurality of knives (130),
determine, based on the first camera image, a knife wear of the first one of the plurality of knives (130),
rotate the rotational axle (120),
use the camera (200) to obtain a second camera image of a second one of the plurality of knives (130), and
determine, based on the second camera image, a knife wear of the second one of the plurality of knives (130).

3. A straw chopper (72) as claimed in claim 2, wherein the controller (300) is configured to obtain the first camera image and the second camera image, while rotating the rotational axle (120).

4. A straw chopper (72) as claimed in claim 2, wherein the controller (300) is configured to obtain the first camera image and the second camera image, while not rotating the rotational axle (120).

5. A straw chopper (72) as claimed in any preceding claim, wherein the controller (300) is further configured to, during use:
identify and analyse a straw cut in the camera images, and
based on the analysed straw cut, determine the knife wear of at least one of the knives (130).

6. A straw chopper (72) as claimed in any preceding claim, wherein at least some of the knives (130) are flailing knives (130).

7. A straw chopper (72) as claimed in claim 2 when dependent on claim 6, wherein the controller (300) is configured to obtain the first camera image and the second camera image, while respectively rotating the rotational axle (120) at two different non-zero rotational speeds.

8. A straw chopper (72) as claimed in any preceding claim, wherein the controller (300) is further configured to adapt a position of the counter knife (140) relative to the rotational axle (120) in dependence of the determined chopping quality and/or in dependence of the determined knife wear.

9. A method of monitoring a straw chopper (72) for a harvester (10), the method comprising
using a camera (200) of the straw chopper (72) to obtain first camera images of straw after having been chopped by the straw chopper (72);
determine a chopping quality of the straw chopper (72) based on the first camera images;
using the camera (200) of the straw chopper (72) to obtain second camera images when the straw chopper (72) is not being used for chopping straw, and
determine a knife wear of at least one of the knives (130) based on the second camera images.

10. A method of monitoring a straw chopper (72) as claimed in claim 9, further comprising determining the knife wear using the chopping quality as determined based on the first camera images.

11. A method of monitoring a straw chopper (72) as claimed in claim 10, further comprising using the knife wear determined based on the second camera images to calibrate a chopping quality based algorithm for determining the knife wear.

12. A non-transitory, computer-readable storage medium storing instructions thereon that when executed by one or more processors cause the one or more processors to execute the method of any of claims 9 to 11.
